(19)

Europäisches Patentamt

European Patent Office

Office européen des brevets

(11) **EP 3 208 598 B1**

(12) **EUROPÄISCHE PATENTSCHRIFT**

| | |
|---|---|
| (45) Veröffentlichungstag und Bekanntmachung des Hinweises auf die Patenterteilung:<br>**22.04.2020  Patentblatt 2020/17** | (51) Int Cl.:<br>**G01N 9/00** *(2006.01)*   **G01F 25/00** *(2006.01)*<br>**G01F 1/84** *(2006.01)*   **G01F 15/02** *(2006.01)* |

(21) Anmeldenummer: **16202668.6**

(22) Anmeldetag: **07.12.2016**

(54) **VERFAHREN ZUM BETREIBEN EINES CORIOLIS-MASSEDURCHFLUSSMESSGERÄTS**

METHOD FOR OPERATING A CORIOLIS MASS FLOW MEASURING DEVICE

PROCÉDÉ DE FONCTIONNEMENT D'UN APPAREIL DE MESURE DE DÉBIT MASSIQUE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2016  DE 102016103048**

(43) Veröffentlichungstag der Anmeldung:
**23.08.2017  Patentblatt 2017/34**

(73) Patentinhaber: **Krohne Messtechnik GmbH**
**47058 Duisburg (DE)**

(72) Erfinder:
 • **Kolahi, Kourosh**
  **47051 Duisburg (DE)**
 • **Kunze, Johannes**
  **44892 Bochum (DE)**
 • **Storm, Ralf**
  **45131 Essen (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**WO-A1-2004/011894    WO-A1-2014/172111**
**WO-A2-01/02816    US-A1- 2012 310 579**

EP 3 208 598 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben eines Coriolis-Massedurchflussmessgeräts, wobei das Coriolis-Massedurchflussmessgerät wenigstens ein von einem Medium durchströmtes Messrohr aufweist, das Messrohr in wenigstens einer Frequenz oder/und in wenigstens einer Eigenform zu Schwingungen angeregt wird, die resultierenden Schwingungen des Messrohrs erfasst werden und die Dichte d des Mediums durch Auswertung der erfassten Schwingungen bestimmt wird.

Verfahren zum Betreiben eines Coriolis-Massedurchflussmessgeräts betreffen nicht nur Vorgänge, die sich ausschließlich mit der Bestimmung der primären Messgröße, also des Massedurchflusses, beschäftigen, der Begriff ist vielmehr weiter zu verstehen. So ist es bekannt, mit einem Coriolis-Massedurchflussmessgerät auch die Dichte des das Messrohr durchströmenden Mediums zu bestimmen, wie es beispielsweise in der europäischen Offenlegungsschrift EP 1 659 389 A1 beschrieben ist. Die Dichtebestimmung erfolgt durch Auswertung der Messrohrschwingungen. Andere Verfahren zum Betreiben eines Coriolis-Massedurchflussmessgeräts sind auf die Bestimmung des Mediumdrucks gerichtet, wobei dies auch durch Auswertung eines mathematischen Modells des Coriolis-Massedurchflussmessgeräts geschieht, also ohne dass eine direkte Druckmessung erfolgt.

Die US 2012/310579 A1 beschreibt ein Verfahren zum Betreiben eines Coriolis-Massedurchflussmessgeräts gemäß dem Oberbegriff des vorliegenden Patentanspruchs 1.

Andere Verfahren beschäftigen sich mit der Erkennung von Mehrphasenströmungen, also eines Durchströmungszustandes des Messrohrs, der ein schnelles Nachregeln von Anregungsfrequenz und -amplitude der Messrohrschwingung erfordert.

Die vorgenannten Verfahren haben den Vorteil, dass eine Vielzahl an Informationen über Größen des Prozesses gewonnen werden kann, mit denen das Coriolis-Massedurchflussmessgerät in Verbindung steht.

Aufgabe der vorliegenden Erfindung ist es, das Verfahren zum Betreiben eines Coriolis-Massedurchflussmessgeräts, von dem die vorliegende Erfindung ausgeht, derart weiterzubilden, dass Aussagen über den Zustand des Coriolis-Massedurchflussmessgerätes getroffen werden können, so dass beispielsweise eine Veränderung des Systemverhaltens des Coriolis-Massedurchflussmessgeräts erkannt werden kann.

Die zuvor beschriebene Aufgabe wird durch ein Verfahren zum Betreiben eines Coriolis-Massedurchflussmessgeräts gemäß dem unabhängigen Patentanspruch 1 gelöst.

Die grundlegende Idee des erfindungsgemäßen Verfahrens besteht darin, dass eine Veränderung in der Änderungsrate r der Dichteempfindlichkeit $E_d$ des Coriolis-Massedurchflussmessgeräts in Abhängigkeit von der Temperatur erkannt wird und nachfolgend als Hinweis auf eine - meist ungewollte - Veränderung an dem Coriolis-Massedurchflussmessgerät ausgegeben wird. Wenn hier von Dichteempfindlichkeit die Rede ist, dann ist damit die Empfindlichkeit gemeint, mit der sich die ermittelte Dichte d des Mediums in Abhängigkeit von einer relevanten Größe ändert. Bei der Bestimmung der Mediumdichte d des Mediums wird bei Coriolis-Massedurchflussmessgeräten häufig der grundsätzliche Zusammenhang zwischen der Resonanzfrequenz $f_0$ des von dem Medium durchströmten Messrohres und der Dichte d des Mediums genutzt. Ein solcher Zusammenhang ist in Gleichung (1) aufgezeigt:

$$d = E_d \cdot \omega_0^{-2} - d_{off} \qquad\qquad (1)$$

$\omega_0$ ist hier die Resonanzkreisfrequenz, die sich von der Resonanzfrequenz $f_0$ also nur um den Faktor $2\pi$ unterscheidet. Bei der Größe $d_{off}$ handelt es sich um einen Offsetwert für die Dichte d in der Bestimmungsgleichung (1). Die Dichteempfindlichkeit $E_d$ gibt also die Empfindlichkeit an, mit der sich die Dichte d des Mediums bei einer Veränderung der erfassten Resonanzfrequenz $f_0$ ändert.

Es ist bekannt, dass die Dichteempfindlichkeit $E_d$ des Coriolis-Massedurchflussmessgeräts von der Temperatur des Messrohrs und der Temperatur des Mediums abhängig ist, wobei die Mediumtemperatur und die Messrohrtemperatur praktisch als gleich angenommen werden können, weshalb nachfolgend immer nur von einer Temperatur T die Rede ist.

In dem zuerst genannten Verfahrensschritt wird bei einer bekannten Kalibriertemperatur $T_k$ die Kalibrier-Dichteempfindlichkeit $E_{d,k}$ bestimmt, also einfach die Dichteempfindlichkeit $E_d$ bei der Kalibriertemperatur $T_k$. Die Bestimmung der Kalibrier-Dichteempfindlichkeit $E_{d,k}$ für das Coriolis-Massedurchflussmessgerät kann nur einmal erfolgen, üblicherweise wird die Kalibrier-Dichteempfindlichkeit $E_{d,k}$ zusammen mit der Kalibriertemperatur $T_k$ abgespeichert. Die Werte können im Rahmen der Werkskalibrierung aufgenommen werden, wenn die Gelegenheit besteht, aber auch in der Einbausituation im Prozess.

Immer dann, wenn der Zustand des Coriolis-Massedurchflussmessgeräts überprüft werden soll, wird dann eine aktuelle Dichteempfindlichkeit $E_d$ des Coriolis-Massedurchflussmessgeräts bei einer von der Kalibriertemperatur $T_k$ abweichenden Temperatur T bestimmt. Wichtig ist, dass sowohl die Kalibrier-Dichteempfindlichkeit $E_{d,k}$ wie auch die typischerweise zu einem anderen Zeitpunkt bestimmte Dichteempfindlichkeit $E_d$ bei einer abweichenden Temperatur T unter Verwendung der erfassten Schwingungen des Messrohres erfolgen. Das ist deshalb wichtig, weil die Schwingungen des Messrohres charakteristisch sind für den Zustand des Coriolis-Massedurchflussmessgeräts. Aus den beiden Dichteempfindlichkeiten $E_d$, die unter Verwendung der erfassten Schwingungen bestimmt worden sind, lässt sich dann eine Messänderungsrate $r_m$ der Dichteempfindlichkeit $E_d$ bestimmten, also die Änderung der Dichteempfindlichkeit in Abhängigkeit von der Temperatur bzw. der Temperaturdifferenz. Der verwendete Begriff "Messänderungsrate" deutet darauf hin, dass diese Änderungsrate der Dichteempfindlichkeit auf den erfassten - also gemessenen - Schwingungen des Messrohres des Coriolis-Massedurchflussmessgeräts beruht.

Zusätzlich wird eine weitere Änderungsrate der Dichteempfindlichkeit $E_d$ bestimmt, nämlich eine Vorhersageänderungsrate $r_p$. Dazu dient ein Vorhersagealgorithmus, der von der aktuellen Temperatur T, die von der Kalibriertemperatur $T_k$ abweicht, abhängt. Wichtig ist, dass dieser Vorhersagealgorithmus - wie immer er auch ermittelt sein mag - nicht abhängt von den erfassten Schwingungen des Messrohres.

Der Vorhersagealgorithmus für die Vorhersageänderungsrate $r_p$ der Dichteempfindlichkeit wird vorteilhaft dann bestimmt, wenn auch die Kalibrier-Dichteempfindlichkeit $E_{d,k}$ des Coriolis-Massedurchflussmessgeräts bestimmt wird. Es handelt sich um eine Berechnungsvorschrift, mit der es möglich ist, die Änderungsrate der Dichteempfindlichkeit in Abhängigkeit von der Temperatur T zu bestimmen, der Vorhersagealgorithmus bildet also die Änderungsrate der Dichteempfindlichkeit in einem Ursprungszustand des Coriolis-Massedurchflussmessgeräts ab. Veränderungen im Systemverhalten des Coriolis-Massedurchflussmessgeräts können also auf die Bestimmung der Vorhersageänderungsrate $r_p$ der Dichteempfindlichkeit keinen Einfluss nehmen, da der Vorhersagealgorithmus bestimmungsgemäß nicht von den erfassten Schwingungen des Messrohres abhängt.

Schließlich werden die beiden ermittelten Änderungsraten der Dichteempfindlichkeit miteinander verglichen, wobei eine Abweichung der Messänderungsrate $r_m$ von der Vorhersageänderungsrate $r_p$ der Dichteempfindlichkeit auf eine Veränderung des dynamischen Verhaltens des Coriolis-Massedurchflussmessgeräts hindeutet. Eine solche Veränderung kann beispielsweise begründet sein in einer strukturellen Veränderung des Messrohres durch Abnutzung oder Ablagerungen. Wenn eine Abweichung der Messänderungsrate $r_m$ von der Vorhersageänderungsrate $r_p$ entdeckt wird oder diese Abweichungen eine bestimmte Schwelle überschreitet, wird ein Abweichsignal erzeugt, das auf diese Veränderung im Verhalten des Coriolis-Massedurchflussmessgeräts hindeutet. Bei dem Abweichsignal kann es sich um eine in dem Coriolis-Massedurchflussmessgerät abgelegte Informationen handeln, das Signal kann auf einer Anzeige des Coriolis-Massedurchflussmessgeräts angezeigt werden, es kann genauso gut über eine Schnittstelle des Coriolis-Massedurchflussmessgeräts über einen Datenbus ausgegeben werden.

Gemäß einer vorteilhaften Ausgestaltung des Verfahrens ist vorgesehen, dass die Messänderungsrate $r_m$ durch Bildung des Quotienten aus der bei der Temperatur T bestimmten Dichteempfindlichkeit $E_d(T)$ und der bei der Kalibriertemperatur $T_k$ bestimmten Dichteempfindlichkeit $E_{d,k}(T_k)$ berechnet wird. Die Bestimmung der Messänderungsrate $r_m$ erfolgt dann also durch nachfolgende Gleichung:

$$r_m = E_d(T) \, / \, E_{d,k}(T_k).$$

In einer Ausgestaltung des zuvor beschriebenen Verfahrens ist vorgesehen, dass die Dichteempfindlichkeit $E_d$ mittels eines mathematischen Modells $G_1(s)$ mindestens zweiter Ordnung des Coriolis-Massedurchflussmessgeräts bestimmt wird, indem das Messrohr zu einer Schwingung in der ersten Eigenform angeregt wird bei einer Eigenfrequenz $f_{01}$ und bei zwei Zusatzfrequenzen $f_{ZA}$ und $f_{ZB}$. Die Beschreibung von Coriolis-Massedurchflussmessgeräten mit Hilfe mathematischer Modelle, die auf Differenzialgleichungen mindestens zweiter Ordnung beruhen, ist weitreichend bekannt, beispielsweise aus der schon zuvor genannten EP 1 659 389 A1. Eine konkrete Rechenvorschrift, mit der die Dichteempfindlichkeit unter Verwendung dreier Anregungsfrequenzen berechnet werden kann, ist beispielsweise:

$$E_d = \frac{\omega_{ZB}\omega_{ZA}}{V_F\left(\omega_{ZB}^2 - \omega_{ZA}^2\right)} \frac{\omega_{ZB}\,\mathrm{Im}\{G_1(j\omega_{ZA})\}}{\mathrm{Im}\{G_1(j\omega_{ZA})\}^2 + \mathrm{Re}\{G_1(j\omega_{ZA})\}^2} \\ - \frac{\omega_{ZB}\omega_{ZA}}{V_F\left(\omega_{ZB}^2 - \omega_{ZA}^2\right)} \frac{\omega_{ZA}\,\mathrm{Im}\{G_1(j\omega_{ZB})\}}{\mathrm{Im}\{G_1(j\omega_{ZB})\}^2 + \mathrm{Re}\{G_1(j\omega_{ZB})\}^2} \tag{2}$$

Hier ist $G_1(s)$ die komplexe Übertragungsfunktion zur Beschreibung der Bewegung des Messrohres in einer Eigenform, vorliegend der ersten Eigenform. Bei $\omega_{ZA}$ und $\omega_{ZB}$ handelt es sich um die zu den Frequenzen $f_{ZA}$ und $f_{ZB}$ korrespondierenden Kreisfrequenzen. $V_F$ ist hier das Volumen des Messrohrs. Bei der ersten Eigenform handelt es sich um den Anregungsmode des Messrohres bei zentraler Auslenkung, bei dem beispielsweise ein gerades Messrohr einen zentralen Schwingungsbauch ausbildet. Die aufgezeigte Vorgehensweise erfüllt die Anforderung, dass die Dichteempfindlichkeit unter Verwendung der erfassten Schwingungen des Messrohres bestimmt wird.

Eine weitere vorteilhafte Ausgestaltung des erfindungsgemäßen Verfahrens zeichnet sich dadurch aus, dass der Vorhersagealgorithmus für die Vorhersageänderungsrate $r_p$ ein Polynom in der Temperaturdifferenz aus der von der Kalibriertemperatur $T_k$ abweichenden Temperatur $T$ und der Kalibriertemperatur $T_k$ ist, insbesondere wobei der Vorhersagealgorithmus für die Vorhersageänderungsrate $r_p$ ein lineares Polynom in der Temperaturdifferenz ist. Der Vorhersagealgorithmus, also die Berechnungsvorschrift für die Vorhersageänderungsrate $r_p$, sieht in diesem Fall also wie folgt aus:

$$r_p = r_p(T\text{-}T_k) = 1 + r_{p0}*(T\text{-}T_k)$$

Auch diese Berechnungsvorschrift erfüllt die Anforderung, dass sie nicht von den erfassten Schwingungen des Messrohres abhängt und sich insoweit Veränderungen in der Systemdynamik des Coriolis-Massedurchflussmessgeräts auf die Ermittlung der Vorhersageänderungsrate $r_p$ nicht auswirken können.

Der Faktor $r_{p0}$ des linearen Gliedes der Temperaturdifferenz $(T\text{-}T_k)$ kann auf unterschiedlichen Weisen bestimmt werden. In einer Ausgestaltung des Verfahrens ist vorgesehen, dass der Faktor $r_{p0}$ des linearen Gliedes der Temperaturdifferenz $(T\text{-}T_k)$ bestimmt wird durch Bestimmung mindestens zweier Dichteempfindlichkeiten $E_d$ bei mindestens zwei verschiedenen Temperaturen, von denen eine Temperatur die Kalibriertemperatur $T_k$ ist.

Coriolis-Massedurchflussmessgeräte werden im Normalbetrieb, also in ihrem Messbetriebsmodus, meist mit maximaler Amplitude hinsichtlich der Messrohrschwingung angeregt. So wird ein gutes Signal-Rausch-Verhältnis bei der Erfassung der Schwingungen des Messrohres erzielt. In einer weiteren vorteilhaften Ausgestaltung des erfindungsgemäßen Verfahrens wird dieses Verfahren in einem Testmodus durchgeführt, in dem das Messrohr mit gegenüber dem Messbetriebsmodus reduzierter Amplitude zu Schwingungen angeregt wird. Dadurch ist es möglich, das Messrohr gleichzeitig mit verschiedenen Frequenzen anzuregen, beispielsweise mit der Resonanzfrequenz der ersten Eigenform und zwei davon abweichenden Frequenzen außerhalb der Resonanz.

Bevorzugt wird simultan zu der Ausführung des bisher beschriebenen Verfahrens auch die Schwingung des Messrohres in der zweiten Eigenform ausgewertet und auf Grundlage dieser Informationen der Massedurchfluss bestimmt, wie dies für Coriolis-Massedurchflussmessgeräte üblich ist. Das Coriolis-Massedurchflussmessgerät wird dann also simultan in seinem Messbetriebsmodus wie auch in seinem Testmodus betrieben. Es ist damit möglich, während der fortwährenden Bestimmung des Massedurchflusses über die Bestimmung der Änderungsraten der Dichteempfindlichkeit eine Aussage über einen veränderten Zustand des Coriolis-Massedurchflussmessgeräts zu erhalten. Wenn der Testmodus mit mehreren Frequenzen mit jeweils reduzierter Amplitude durchgeführt wird, ist das Signal-Rausch-Verhältnis für die Bestimmung des Massedurchflusses zwar reduziert, jedoch muss der Messbetrieb nicht unterbrochen werden.

Bei einer weiteren vorteilhaften Ausgestaltung des Verfahrens ist vorgesehen, dass wenigstens einer der Verfahrensschritte Bestimmung der Kalibrier-Dichteempfindlichkeit $E_{d,k}(T_k)$, Bestimmung der Dichteempfindlichkeit $E_d(T)$ bei einer von der Kalibriertemperatur $T_k$ abweichenden Temperatur $T$, Bestimmung der Messänderungsrate $r_m$ der Dichteempfindlichkeit $E_d$, Bestimmung der Vorhersageänderungsrate $r_p$ der Dichteempfindlichkeit mit einem Vorhersagealgorithmus und Erzeugung eines Abweichsignal in einem an das Coriolis-Massedurchflussmessgerät anzuschließenden Testgerät durchgeführt wird. Besonders vorteilhaft ist es, wenn alle vorgenannten Verfahrensschritte außer der Bestimmung der Kalibrier-Dichteempfindlichkeit in dem an das Coriolis-Massedurchflussmessgerät anzuschließenden Testgerät realisiert sind. Vorzugsweise werden die Kalibrier-Dichteempfindlichkeit $E_{d,k}$ und die Kalibriertemperatur sowie eine eindeutige Beschreibung des Vorhersagealgorithmus für die Vorhersageänderungsrate $r_p$ in den jeweiligen Coriolis-Massedurchflussmessgerät abgelegt, weil diese Informationen charakterisierend für das individuelle Coriolis-Massedurchflussmessgerät sind. Es könnte in dem Coriolis-Massedurchflussmessgerät beispielsweise der Parameter $r_{p0}$ abgelegt werden. Das Testgerät ist dann so ausgestaltet, dass es bei einer Temperatur $T$ die Dichteempfindlichkeit $E_d(T)$ bestimmt, es die Messänderungsrate $r_m$ der Dichteempfindlichkeit $E_d$ aus der Kalibrier-Dichteempfindlichkeit $E_{d,k}(T_k)$ und der Dichteempfindlichkeit $E_d(T)$ bei der Temperatur $T$ bestimmt, dass es eine Vorhersageänderungsrate $r_p$ der Dichteempfindlichkeit mit einem Vorhersagealgorithmus berechnet und dass es bei Überschreitung einer vorgegebenen Abweichung der Messänderungsrate $r_m$ von der Vorhersageänderungsrate $r_p$ ein Abweichsignal erzeugt.

Das erfindungsgemäße Verfahren wird vorzugsweise so angewendet, dass die Bestimmung der Kalibrier-Dichteempfindlichkeit $E_{d,k}(T_k)$ und die Bestimmung des Vorhersagealgorithmus für die Vorhersageänderungsrate $r_p$ zu einem Zeitpunkt vor der Inbetriebnahme des Coriolis-Massedurchflussmessgeräts im Prozess erfolgen, insbesondere bei einer Werkskalibrierung des Coriolis-Massedurchflussmessgeräts.

Im Einzelnen gibt es nun eine Vielzahl von Möglichkeiten, das erfindungsgemäße Verfahren zum Betreiben eines Coriolis-Massedurchflussmessgeräts auszugestalten und weiterzubilden. Dazu wird auf die dem Patentanspruch

nachgeordneten Patentansprüche sowie auf die nachfolgende Beschreibung bevorzugter Ausführungsbeispiele der Erfindung unter Bezugnahme auf die Zeichnung verwiesen. In der Zeichnung zeigt

Fig. 1    schematisch ein Coriolis-Massedurchflussmessgerät, mit dem das beanspruchte Verfahren durchgeführt wird.

Fig. 2    schematisch ein Ablaufdiagramm des beanspruchten Verfahrens zum Betreiben eines Coriolis-Massedurchflussmessgeräts und

Fig. 3    ein gegenüber der Darstellung in Fig. 2 erweitertes Ablaufdiagramm zur Darstellung des beanspruchten Verfahrens.

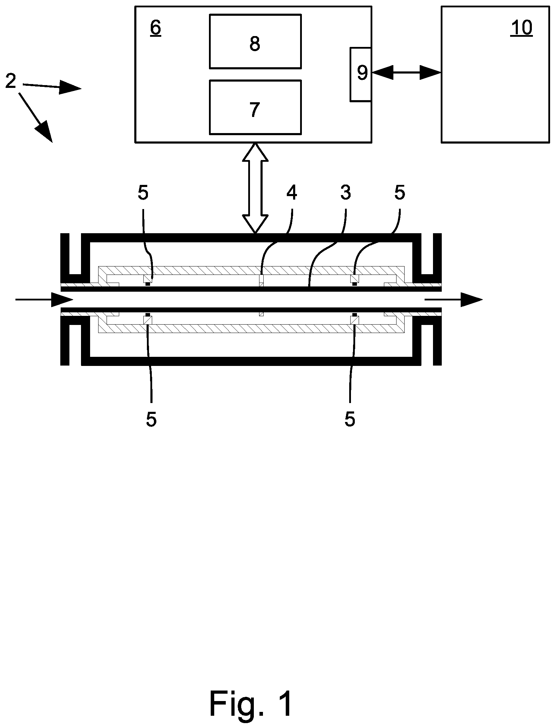

In den Fig. 1 bis 3 ist grundsätzlich ein Verfahren 1 zum Betreiben eines Coriolis-Massedurchflussmessgeräts 2 dargestellt, wobei Fig. 1 sich im Wesentlichen dem strukturellen Aufbau des Coriolis-Massedurchflussmessgeräts 2 widmet. Das Coriolis-Massedurchflussmessgerät 2 weist ein Messrohr 3 auf, das von einem nicht näher dargestellten Medium durchströmt wird.

Das Messrohr 3 wird in wenigstens einer Frequenz oder/und in wenigstens einer Eigenform zu Schwingungen angeregt. Dazu dient ein hier mittig hinsichtlich der Längserstreckung des Messrohres 3 angeordneter elektromagnetischer Aktuator 4, mit dem auf das Messrohr 3 zentral eine Kraft ausgeübt werden kann, mit der das Messrohr 3 im ersten Schwingungsmodus angeregt wird. Bei Durchströmen des Messrohrs 3 mit einem Medium stellt sich aufgrund der wirkenden Corioliskräfte automatisch eine Schwingung des Messrohrs 3 im zweiten Schwingungsmodus ein, der manchmal auch Coriolis-Mode genannt wird.

Mittels der links und rechts von dem Aktuator 4 angeordneten Schwingungsaufnehmern 5 können die resultierenden Schwingungen des Messrohrs 3 erfasst werden. Durch Auswertung der Messrohrschwingungen können verschiedene Messgrößen ermittelt werden. Durch Auswertung der Schwingungen in der zweiten Eigenform des Messrohrs 3 kann die primäre Messgröße, also der Massedurchfluss, bestimmt werden. Durch Auswertung der Messrohrschwingungen in der ersten Eigenform kann die Dichte des Mediums bestimmt werden, wie dies grundsätzlich bekannt ist.

Neben dem mechanischen Aufbau verfügt das Coriolis-Massedurchflussmessgerät 2 auch über eine elektronische Steuer- und Auswerteeinheit 6, die meist in ein hier nicht dargestelltes einheitliches Gehäuse des Coriolis-Massedurchflussmessgerät 2 integriert ist. Die Steuer- und Auswerteeinheit 6 dient zum einen der geeigneten Ansteuerung des Messrohrs 3 des Coriolis-Massedurchflussmessgeräts 2 mit einem Stellsignal, der Nachführung der Anregungsfrequenz in die Resonanzfrequenz des Messrohrs 2, der Einstellung einer beabsichtigt von der Resonanzfrequenz abweichenden Frequenz, der Auswertung der Sensorsignale der Schwingungssensoren 5 sowie der Durchführung verschiedener Verfahren zum Betreiben des Coriolis-Massedurchflussmessgeräts wie die Bestimmung der primären Messgröße, die Bestimmung von sekundären Messgrößen und die Beobachtung des Coriolis-Massedurchflussmessgeräts 2. Dazu ist die Steuer- und Auswerteeinheit 6 mit einer elektronischen Recheneinheit 7 versehen und im vorliegenden Fall mit einer Anzeigeeinheit 8. Über eine Schnittstelle 9 können Daten zwischen dem Coriolis-Massedurchflussmessgerät 2 und einem externen Gerät 10 ausgetauscht werden. Bei dem externen Gerät 10 kann es sich um eine Leitwarte handeln, um ein Bediengerät oder auch um ein Testgerät.

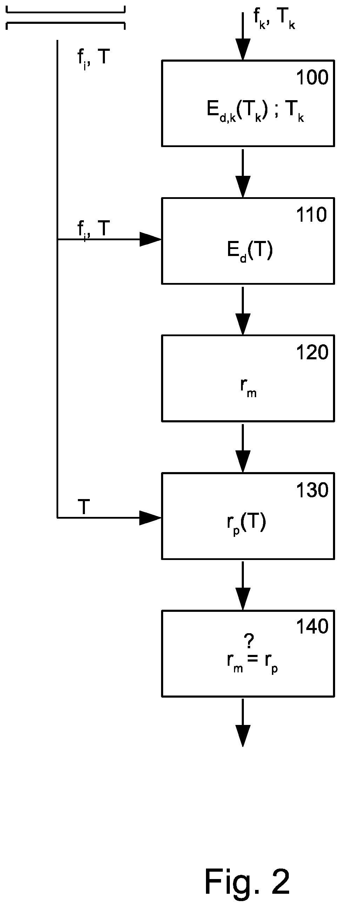

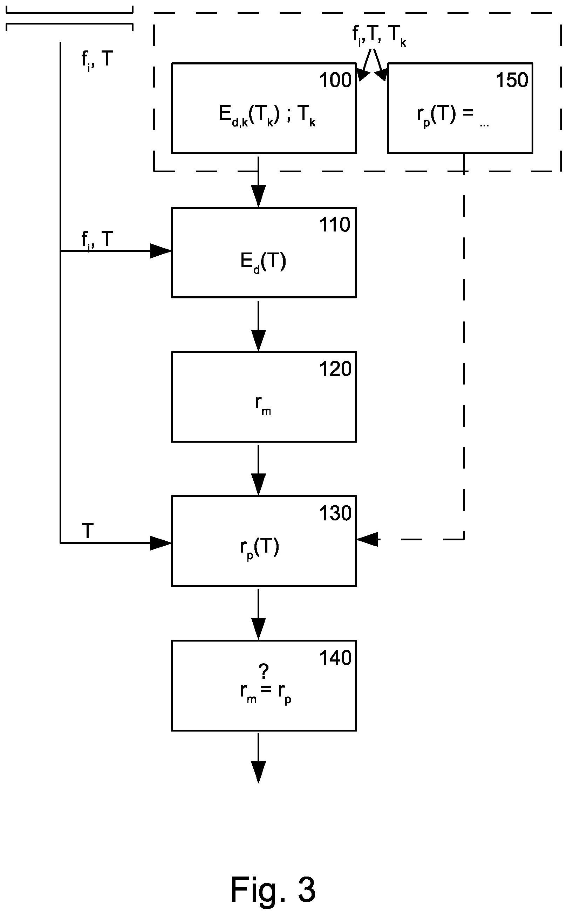

In den Fig. 2 und 3 ist jeweils das beanspruchte Verfahren 1 zum Betreiben des Coriolis-Massedurchflussmessgeräts 2 dargestellt. Die Idee des Verfahrens besteht darin, dass Änderungsraten $r$ der Dichteempfindlichkeit $E_d$ zum Test des Coriolis-Massedurchflussmessgeräts 2 bestimmt werden und eine Abweichung dieser Änderungsraten $r$ zum Anlass genommen wird, auf eine Veränderung des dynamischen Verhalten des Coriolis-Massedurchflussmessgeräts 2 hinzuweisen.

Dazu wird eine Änderungsrate $r$ der Dichteempfindlichkeit $E_d$, nämlich die Messänderungsrate $r_m$ in Abhängigkeit von den erfassten Schwingungen des Messrohres 3 bestimmt, so dass sich eine veränderte Systemdynamik auch auf die Bestimmung der Messänderungsrate $r_m$ auswirkt.

Eine andere Änderungsrate der Dichteempfindlichkeit, nämlich die Vorhersageänderungsrate $r_p$, wird ebenfalls bestimmt, wobei der Vorhersagealgorithmus zur Berechnung dieser Vorhersageänderungsrate $r_p$ nicht von den erfassten Schwingungen des Messrohres 3 abhängt und damit nicht von einer veränderten Systemdynamik des Coriolis-Massedurchflussmessgeräts 2. Auf diese Art und Weise können basierend auf der Bestimmung der Änderungsrate der Empfindlichkeit der Dichtemessung Rückschlüsse gezogen werden auf den Zustand bzw. auf einen veränderten Zustand des Coriolis-Massedurchflussmessgeräts 2.

In den Fig. 2 und 3 ist zunächst schematisch und stellvertretend für das gesamte Coriolis-Massedurchflussmessgerät 3 das Messrohr 3 dargestellt. Von dem Messrohr 3 werden Schwingungen erfasst, die eine oder mehrere Frequenzen $f_i$ aufweisen. Das Messrohr weist ferner eine Temperatur $T$ auf.

In dem Verfahrensschritt 100 wird bei einer Kalibriertemperatur $T_k$ die Kalibrier-Dichteempfindlichkeit $E_{d,k}$ des Coriolis-Massedurchflussmessgeräts 2 unter Verwendung der erfassten Schwingungen des Messrohres 3 bestimmt. Dies ist in den Fig. 2 und 3 angedeutet durch die erfasste Messrohrschwingung mit der Frequenz $f_k$ und der Temperatur $T_k$.

In dem Verfahrensschritt 110 wird bei einer von der Kalibriertemperatur $T_k$ abweichenden Temperatur T die Dichteempfindlichkeit $E_d(T)$ des Coriolis-Massedurchflussmessgeräts 2 unter Verwendung der erfassten Schwingungen des Messrohres 3 bestimmt. Dadurch, dass die Bestimmung der Dichteempfindlichkeit $E_d(T)$ unter Verwendung der erfassten Schwingungen des Messrohres 3 geschieht, hängt die Dichteempfindlichkeit $E_d(T)$ von dem dynamischen Verhalten des Coriolis-Massedurchflussmessgeräts 2 bzw. des Messrohres 3 ab.

Aus den zuvor gewonnenen Daten wird im Verfahrensschritt 120 eine Messänderungsrate $r_m$ der Dichteempfindlichkeit $E_d$ aus der Kalibrier-Dichteempfindlichkeit $E_{d,k}(T_k)$ und der Dichteempfindlichkeit $E_d(T)$ bestimmt. Im vorliegenden Fall wird der Quotient dieser beiden Dichteempfindlichkeiten gebildet.

In dem darauffolgend dargestellten Verfahrensschritt 130 wird eine Vorhersageänderungsrate $r_p$ der Dichteempfindlichkeit $E_d$ mit einem Vorhersagealgorithmus berechnet, der zwar von der von der Kalibriertemperatur $T_k$ abweichenden Temperatur T abhängt, der jedoch nicht abhängt von den erfassten Schwingungen des Messrohres 3, was dadurch angedeutet ist, dass lediglich die Temperatur T auf die Bestimmung der Vorhersageänderungsrate $r_p$ einwirkt.

Schließlich wird in dem Verfahrensschritt 140 eine Abweichung der Messänderungsrate $r_m$ von der Vorhersageänderungsrate $r_p$ bestimmt und im Fall einer Abweichung oder des Überschreitens einer gewissen Abweichungsgrenze ein Abweichsignal erzeugt.

In den Fig. 2 und 3 ist eine serielle Abfolge aller Verfahrensschritte 100, 110, 120, 130, 140 dargestellt. Dies muss nicht zwingend so sein. Vielmehr kann die Vorhersageänderungsrate $r_p$ unabhängig von den zuvor dargestellten Verfahrensschritten berechnet werden, also beispielsweise simultan zu diesen Verfahrensschritten. Lediglich für den letzten Verfahrensschritt der Ermittlung einer Abweichung der Messänderungsrate $r_m$ von der Vorhersageänderungsrate $r_p$ ist es erforderlich, dass diese Änderungsraten vollständig bekannt sind.

In Fig. 3 ist dargestellt, dass die Bestimmung der Kalibrier-Dichteempfindlichkeit $E_{d,k}(T_k)$ im Verfahrensschritt 100 und die Bestimmung des Vorhersagealgorithmus zur Bestimmung der Vorhersageänderungsrate $r_p$ der Dichteempfindlichkeit $E_d$ in einem Verfahrensschritt 150 vorgreiflich ablaufen, vorzugsweise während das Coriolis-Massedurchflussmessgerät 2 kalibriert wird, beispielsweise bei der initialen Werkskalibrierung. Die entsprechenden Daten werden dann bevorzugt in dem Coriolis-Massedurchflussmessgerät abgelegt, da sie das individuelle Coriolis-Massedurchflussmessgerät kennzeichnen.

**Bezugszeichen**

1. Verfahren

2. Coriolis-Massedurchflussmessgerät

3. Messrohr

4. Aktuator

5. Schwingungsaufnehmer

6. Steuer- und Auswerteeinheit

7. elektronische Recheneinheit

8. Anzeige

9. Schnittstelle

10. externes Gerät (Bediengerät / Testgerät / Leitwarte)

100. Bestimmung der Kalibrier-Dichteempfindlichkeit

110. Bestimmung der Dichteempfindlichkeit $E_d(T)$ bei einer von der Kalibriertemperatur $T_k$ abweichenden Temperatur T

120. Bestimmung der Messänderungsrate $r_m$ der Dichteempfindlichkeit

130. Bestimmung der Vorhersageänderungsrate $r_p$ der Dichteempfindlichkeit

140. Bestimmung einer Abweichung der Messänderungsrate $r_m$ von der Vorhersageänderungsrate $r_p$ und gegebenenfalls Erzeugung eines Abweichsignals

150. Bestimmung des Vorhersagealgorithmus für die Vorhersageänderungsrate $r_p$

**Patentansprüche**

1. Verfahren (1) zum Betreiben eines Coriolis-Massedurchflussmessgeräts (2), wobei das Coriolis-Massedurchflussmessgerät wenigstens ein von einem Medium durchströmtes Messrohr (3) aufweist, das Messrohr (3) in wenigstens einer Frequenz oder/und in wenigstens einer Eigenform zu Schwingungen angeregt wird, die resultierenden Schwingungen des Messrohrs (3) erfasst werden und die Dichte d des Mediums durch Auswertung der erfassten Schwingungen bestimmt wird, wobei bei einer Kalibriertemperatur $T_k$ eine Kalibrier-Dichteempfindlichkeit $E_{d,k}(T_k)$ des Coriolis-Massedurchflussmessgeräts (2) unter Verwendung von erfassten Schwingungen des Messrohres (3) bestimmt wird (100), wobei bei einer von der Kalibriertemperatur $T_k$ abweichenden Temperatur T eine Dichteempfindlichkeit $E_d(T)$ des Coriolis-Massedurchflussmessgeräts (2) unter Verwendung von erfassten Schwingungen des Messrohres (3) bestimmt wird (110), wobei eine Dichteempfindlichkeit $E_d$ die Empfindlichkeit angibt, mit der sich die Dichte d des Mediums bei einer Veränderung der erfassten Resonanzfrequenz $f_0$ ändert, wobei eine Messänderungsrate $r_m$ der Dichteempfindlichkeit $E_d$ aus der unter Verwendung von erfassten Schwingungen bestimmten Kalibrier-Dichteempfindlichkeit $E_{d,k}(T_k)$ und der Dichteempfindlichkeit $E_d(T)$ bei der Temperatur T bestimmt wird (120), **dadurch gekennzeichnet,** **dass** eine Vorhersageänderungsrate $r_p$ der Dichteempfindlichkeit mit einem Vorhersagealgorithmus berechnet wird (130), der von der von der Kalibriertemperatur $T_k$ abweichenden Temperatur T abhängt, der jedoch nicht abhängt von den erfassten Schwingungen des Messrohres (3) während der Bestimmung der Dichteempfindlichkeit $E_d(T)$ bei der Temperatur T, und **dass** bei einer vorgegebenen Abweichung der Messänderungsrate $r_m$ von der Vorhersageänderungsrate $r_p$ ein Abweichsignal erzeugt wird (140).

2. Verfahren (1) nach Anspruch 1, **dadurch gekennzeichnet, dass** die Messänderungsrate $r_m$ durch Bildung des Quotienten aus der bei der Temperatur T bestimmten Dichteempfindlichkeit $E_d(T)$ und der bei der Kalibriertemperatur $T_k$ bestimmten Dichteempfindlichkeit $E_{d,k}(T_k)$ berechnet wird.

3. Verfahren (1) nach Anspruch 1 oder 2, dass die Dichteempfindlichkeit $E_d$ mittels eines mathematischen Modells $G_1(s)$ mindestens zweiter Ordnung des Coriolis-Massedurchflussmessgeräts (2) bestimmt wird, indem das Messrohr (3) zu einer Schwingung in der ersten Eigenform angeregt wird bei einer Eigenfrequenz $f_{01}$ der ersten Eigenform und bei zwei Zusatzfrequenzen $f_{ZA}$ und $f_{ZB}$.

4. Verfahren (1) nach einem der Ansprüche 1 bis 3, **dadurch gekennzeichnet, dass** der Vorhersagealgorithmus für die Vorhersageänderungsrate $r_p$ ein Polynom in der Temperaturdifferenz aus der von der Kalibriertemperatur $T_k$ abweichenden Temperatur T und der Kalibriertemperatur $T_k$ ist, insbesondere wobei der Vorhersagealgorithmus für die Vorhersageänderungsrate $r_p$ ein lineares Polynom in der Temperaturdifferenz ist.

5. Verfahren (1) nach Anspruch 4, **dadurch gekennzeichnet, dass** der Faktor $r_{p0}$ des linearen Gliedes der Temperaturdifferenz ($T-T_k$) bestimmt wird durch Bestimmung mindestens zweier Dichteempfindlichkeiten $E_d$ bei mindestens zwei verschiedenen Temperaturen, von denen eine Temperatur die Kalibriertemperatur $T_k$ ist.

6. Verfahren (1) nach einem der Ansprüche 1 bis 5, **dadurch gekennzeichnet, dass** das Verfahren in einem Testmodus durchgeführt wird, in dem das Messrohr (3) mit gegenüber dem Messbetriebsmodus reduzierter Amplitude zu Schwingung angeregt wird.

7. Verfahren (1) nach einem der Ansprüche 1 bis 6, **dadurch gekennzeichnet, dass** simultan die Schwingung des Messrohrs (3) in der zweiten Eigenform ausgewertet und der Massedurchfluss bestimmt wird.

8. Verfahren (1) nach einem der Ansprüche 1 bis 7, **dadurch gekennzeichnet, dass** wenigstens einer der Verfahrensschritte Bestimmung der Kalibrier-Dichteempfindlichkeit $E_{d,k}(T_k)$ (100), Bestimmung der Dichteempfindlichkeit $E_d(T)$ bei einer von der Kalibriertemperatur $T_k$ abweichenden Temperatur T (110), Bestimmung der Messänderungs-

rate $r_m$ der Dichteempfindlichkeit $E_d$ (120), Bestimmung der Vorhersageänderungsrate $r_p$ der Dichteempfindlichkeit mit einem Vorhersagealgorithmus (130) und Erzeugung eines Abweichsignal (140) in einem an das Coriolis-Massedurchflussmessgerät (2) anzuschließenden Testgerät (10) durchgeführt wird.

9. Verfahren (1) nach einem der Ansprüche 1 bis 8, **dadurch gekennzeichnet, dass** die Bestimmung der Dichteempfindlichkeit $E_{d,k}(T_k)$ (100) und die Bestimmung des Vorhersagealgorithmus für die Vorhersageänderungsrate $r_p$ (150) zu einem Zeitpunkt vor der Inbetriebnahme des Coriolis-Massedurchflussmessgerät (2) im Prozess erfolgen, insbesondere bei einer Werkskalibrierung des Coriolis-Massedurchflussmessgeräts (2).

## Claims

1. Method (1) for operating a Coriolis mass flow meter (2), wherein the Coriolis mass flow meter has at least one measuring tube (3) through which a medium flows, the measuring tube (3) is excited to oscillations in at least one frequency and/or in at least one eigenmode, the resulting oscillations of the measuring tube (3) are detected and the density d of the medium is determined by evaluating the detected oscillations,
   wherein at a calibration temperature $T_k$ a calibration density sensitivity $E_{d,k}(T_k)$ of the Coriolis mass flow meter (2) is determined (100) using the detected oscillations of the measuring tube (3), wherein at a temperature T differing from the calibration temperature $T_k$ a density sensitivity $E_d(T)$ of the Coriolis mass flow meter (2) is determined (110) using the detected oscillations of the measuring tube (3), wherein a density sensitivity $E_d$ indicates the sensitivity with which the density d of the medium changes with a change in the detected resonance frequency $f_0$, wherein a measurement change rate $r_m$ of the density sensitivity $E_d$ is determined (120) from the calibration density sensitivity $E_{d,k}(T_k)$ determined using the detected oscillations and the density sensitivity $E_d(T)$ at the temperature T,
   **characterized in**
   **that** a prediction change rate $r_p$ of the density sensitivity is calculated (130) using a prediction algorithm which depends on the temperature T differing from the calibration temperature $T_k$, but not depending on the detected oscillations of the measuring tube (3) during the determination of the density sensitivity $E_d(T)$ at the temperature T, and **that** a deviation signal is generated when the measurement change rate $r_m$ deviates from the prediction change rate $r_p$ (140).

2. Method (1) according to claim 1, **characterized in that** the measurement change rate $r_m$ is calculated by forming the quotient of the density sensitivity $E_d(T)$ determined at the temperature T and the density sensitivity $E_{d,k}(T_k)$ determined at the calibration temperature $T_k$.

3. Method (1) according to claim 1 or 2, **characterized in that** the density sensitivity $E_d$ is determined by means of a mathematical model $G_1(s)$ of at least second order of the Coriolis mass flow meter (2) by exciting the measuring tube (3) to oscillate in the first eigenmode at a natural frequency $f_{01}$ of the first eigenmode and at two additional frequencies $f_{ZA}$ and $f_{ZB}$.

4. Method (1) according to any one of claims 1 to 3, **characterized in that** the prediction algorithm for the prediction change rate $r_p$ is a polynomial in the temperature difference between the temperature T, which differs from the calibration temperature $T_k$, and the calibration temperature $T_k$, in particular wherein the prediction algorithm for the prediction change rate $r_p$ is a linear polynomial in the temperature difference.

5. Method (1) according to claim 4, **characterized in that** the factor $r_{p0}$ of the linear member of the temperature difference $(T-T_k)$ is determined by determining at least two density sensitivities $E_d$ at at least two different temperatures, one of which is the calibration temperature $T_k$.

6. Method (1) according to any one of claims 1 to 5, **characterized in that** the method is carried out in a test mode in which the measuring tube (3) is excited to oscillate with an amplitude reduced compared with the measuring mode.

7. Method (1) according to any one of claims 1 to 6, **characterized in that** the oscillation of the measuring tube (3) is simultaneously evaluated in the second eigenmode and the mass flow rate is determined.

8. Method (1) according to any one of claims 1 to 7, **characterized in that** at least one of the method steps determination of the calibration density sensitivity $E_{d,k}(T_k)$ (100), determination of the density sensitivity $E_d(T)$ at a temperature T (110) deviating from the calibration temperature $T_k$, determining the measurement change rate $r_m$ of the density sensitivity $E_d$ (120), determining the prediction change rate $r_p$ of the density sensitivity with a prediction algorithm (130), and generating a deviation signal (140) is carried out in a test device (10) to be connected to the Coriolis mass flow meter (2).

9. Method (1) according to any one of claims 1 to 8, **characterized in that** the determination of the density sensitivity $E_{d,k}(T_k)$ (100) and the determination of the prediction algorithm for the prediction change rate $r_p$ (150) are carried out at a time before the Coriolis mass flowmeter (2) is put into operation in the process, in particular during a factory calibration of the Coriolis mass flowmeter (2).

## Revendications

1. Procédé (1) pour faire fonctionner un débitmètre massique de Coriolis (2), dans lequel le débitmètre massique de Coriolis présente au moins un tube de mesure (3) parcouru par un fluide, le tube de mesure (3) est excité à des oscillations dans au moins une fréquence et/ou dans au moins un mode propre, les oscillations résultantes du tube de mesure (3) sont détectées et la densité d du fluide est déterminée par l'évaluation des oscillations détectées, où, à une température d'étalonnage $T_k$, une sensibilité de densité d'étalonnage $E_{d,k}(T_k)$ du débitmètre massique de Coriolis (2) est déterminée (100) en utilisant les oscillations détectées du tube de mesure (3), où, à une température T différente de la température d'étalonnage $T_k$, une sensibilité de densité $E_d(T)$ du débitmètre massique de Coriolis (2) est déterminée (110) en utilisant les oscillations détectées du tube de mesure (3), où une sensibilité de densité $E_d$ indique la sensibilité avec laquelle la densité d du milieu change avec un vanation de la fréquence de résonance détectée $f_0$, où un taux de variation de mesure $r_m$ de la sensibilité de densité $E_d$ est déterminé (120) à partir de la sensibilité de densité d'étalonnage $E_{d,k}(T_k)$ déterminée en utilisant les oscillations détectées et la sensibilité de densité Ed(T) à la température T,
**caractérisé en ce**
**qu'**un taux de variation de prédiction $r_p$ de la sensibilité de la densité est calculé (130) en utilisant un algorithme de prédiction qui dépend de la température T qui diffère de la température d'étalonnage $T_k$, mais qui ne dépend pas des oscillations détectées du tube de mesure (3) lors de la détermination de la sensibilité de la densité $E_d(T)$ à la température T,
et **qu'**un signal de déviation est généré lorsque le taux de variation de la mesure $r_m$ s'écarte du taux de variation de la prédiction $r_p$ (140).

2. Procédé (1) selon la revendication 1, **caractérisée en ce que** le taux de variation de mesure $r_m$ est calculé en formant le quotient de la sensibilité de la densité $E_d(T)$ déterminée à la température T et de la sensibilité de la densité $E_{d,k}(T_k)$ déterminée à la température d'étalonnage $T_k$.

3. Procédé (1) selon la revendication 1 ou 2, **caractérisée en ce que** la sensibilité à la densité $E_d$ est déterminée au moyen d'un modèle mathématique $G_1(s)$ d'au moins le deuxième ordre du débitmètre massique de Coriolis (2) en excitant le tube de mesure (3) pour qu'il oscille dans le première mode propre à une fréquence naturelle $f_{01}$ de le première mode propre et à deux fréquences supplémentaires $f_{ZA}$ et $f_{ZB}$.

4. Procédé (1) selon l'une des revendications 1 à 3, **caractérisé en ce que** l'algorithme de prédiction pour le taux de variation de prédiction $r_p$ est un polynôme dans la différence de température entre la température T, qui diffère de la température d'étalonnage $T_k$, et la température d'étalonnage $T_k$, en particulier dans lequel l'algorithme de prédiction pour le taux de variation de prédiction $r_p$ est un polynôme linéaire dans la différence de température.

5. Procédé (1) selon la revendication 4, **caractérisée en ce que** le facteur $r_{p0}$ de l'élément linéaire de la différence de température $(T-T_k)$ est déterminé en déterminant au moins deux sensibilités de densité $E_d$ à au moins deux températures différentes, dont l'une est la température d'étalonnage $T_k$.

6. Procédé (1) selon l'une des revendications 1 à 5, **caractérisée en ce que** la procédé est réalisée dans un mode de test dans lequel le tube de mesure (3) est excité pour osciller avec une amplitude réduite par rapport au mode de mesure.

7. Procédé (1) selon l'une des revendications 1 à 6, **caractérisée en ce que** l'oscillation du tube de mesure (3) est simultanément évaluée dans le deuxième mode propre et le débit massique est déterminé.

8. Procédé (1) selon l'une quelconque des revendications 1 à 7, **caractérisé en ce qu'**au moins l'une des étapes du procédé est la détermination de la sensibilité de densité d'étalonnage $E_{d,k}(T_k)$ (100), la détermination de la sensibilité de densité $E_d(T)$ à une température T (110) s'écartant de la température d'étalonnage $T_k$, la détermination du taux de variation de mesure $r_m$ de la sensibilité de la densité $E_d$ (120), la détermination du taux de variation de prédiction $r_p$ de la sensibilité de la densité avec un algorithme de prédiction (130) et la génération d'un signal de déviation (140) sont effectuées dans un dispositif de test (10) à connecter au débitmètre massique de Coriolis (2).

9. Procédé (1) selon l'une quelconque des revendications 1 à 8, **caractérisée en ce que** la détermination de la sensibilité à la densité $E_{d,k}(T_k)$ (100) et la détermination de l'algorithme de prédiction pour le taux de variation prévisible $r_p$ (150) sont effectuées à un moment précédant la mise en service du débitmètre massique de Coriolis (2) dans le processus, en particulier pendant un étalonnage en usine du débitmètre massique de Coriolis (2).

Fig. 1

Fig. 2

Fig. 3

**EP 3 208 598 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1659389 A1

- US 2012310579 A1